# EUROPÄISCHE PATENTSCHRIFT

(11) **EP 2 892 791 B1**
(45) Veröffentlichungstag und Bekanntmachung des Hinweises auf die Patenterteilung: **30.11.2016**
(21) Anmeldenummer: 13763184.2
(22) Anmeldetag: 30.08.2013
(51) Int. Cl.: G01L 5/00, G01L 5/10, G01M 13/02

(54) **VERFAHREN ZUR MESSUNG EINER RIEMENSPANNUNG**
METHOD FOR MEASURING BELT TENSION
PROCÉDÉ DE MESURE DE LA TENSION D'UNE COURROIE

(30) Priorität: 03.09.2012 DE 102012017318
(43) Veröffentlichungstag der Anmeldung: 15.07.2015
(73) Patentinhaber: ThyssenKrupp Presta AG, 9492 Eschen (LI); ThyssenKrupp AG, 45143 Essen (DE)
(72) Erfinder: SCHOLTEN, Michael, A-6723 Blons (AT); ILLES, Andras, CH-9470 Buchs (CH)
(74) Vertreter: ThyssenKrupp Intellectual Property GmbH
(86) Internationale Anmeldenummer: PCT/EP2013/002613
(87) Internationale Veröffentlichungsnummer: WO 2014/032810

(56) Entgegenhaltungen:
- EP-A2- 1 767 408
- WO-A1-2012/033447
- DE-B3-102012 017 317
- FR-A1- 2 956 983
- US-B2- 7 210 361

## Beschreibung

Die vorliegende Erfindung betrifft ein Verfahren zur Messung der Spannung eines Zahnriemens in einem Riemengetriebe mit den Merkmalen des Oberbegriffs des Anspruchs 1.

In elektromechanischen Lenkungen für Kraftfahrzeuge werden Riemengetriebe mit Zahnriemen eingesetzt, um eine Untersetzung zwischen einem Elektromotor, der die Lenkkraft oder Lenkhilfskraft aufbringt und einem rotierendem Getriebeelement wie zum Beispiel einer Kugelmutter zu erzielen. Durch das Riemengetriebe wird auch eine Entkopplung zwischen dem Motor und dem eigentlichen Lenkgetriebe bewirkt, die zu einer Geräuschreduktion führen kann.

Die Spannung des Zahnriemens in solchen Betrieben ist dabei von großer Bedeutung. Eine zu hohe Riemenspannung beeinträchtigt die Lebensdauer der Lager von Motorwelle und angetriebenem Getriebeelement. Hierdurch können auch vermehrt Geräusche entstehen. Eine zu niedrige Riemenspannung erhöht die Gefahr, dass der Zahnriemen in dem Ritzel oder der Riemenscheibe übersetzt und dadurch beschädigt wird. Weiter kommt es zu "totem Gang" bei einem Wechsel der Drehrichtung des Getriebes, das bei einer Kraftfahrzeuglenkung in beide Drehrichtungen möglichst gleich arbeiten soll. Schließlich treten bei zu geringer Spannung auch Geräusche auf, die zum Beispiel durch die Neigung des unbelasteten Trums des Riemens zum Flattern entstehen. Wegen der hohen Risiken ist eine zu niedrige Riemenspannung in einer elektromechanischen Lenkung in jedem Fall zu vermeiden.

Bei einer optimalen Riemenspannung sind sowohl die Lebensdauer des Riemens und der damit im Eingriff stehenden Lager optimiert als auch die Geräuschentwicklung und das Lastwechselverhalten.

Beispiele für Einrichtungen zur Riemenspannung in elektrischen Kraftfahrzeugservolenkungen sind in der Offenlegungsschrift DE 10 304 189 A1 enthalten.

Verfahren und Vorrichtungen für die Messung und gegebenenfalls Einstellung der Riemenspannung sind ebenfalls bekannt, wie z.B. WO 2012/033447 und EP1767408.

Die Offenlegungsschrift DE 196 16 574 A1 beschreibt beispielsweise eine Vorrichtung und ein Verfahren zur Messung der Spannung eines Riemens, bei der der Riemen zu Schwingungen angeregt wird, um die Resonanzschwingungsfrequenz des Riemens zu ermitteln. Aus der Resonanzschwingungsfrequenz des Riemens wird dann auf die Riemenspannung geschlossen. In der Praxis zeigt sich, dass ein Zahnriemen aufgrund seiner Breite nicht das Schwingungsverhalten einer Saite zeigt. Während eine schwingende Saite eine ausgeprägte Resonanzfrequenz aufweist, ist bei einem Zahnriemen eine solche einzelne Resonanzfrequenz nicht zu bestimmen. Vielmehr sind in dem Zahnriemen in Laufrichtung des Riemens viele Materialstränge in Form von Bündeln von zugfesten Fasern parallel zueinander angeordnet, die die Zugfestigkeit und Formbeständigkeit des Zahnriemens garantieren. Diese Elemente weisen jeweils für sich ein isoliertes Schwingverhalten auf. Da diese Elemente über andere Bestandteile des Riemens miteinander gekoppelt sind, wird auch noch ein Spektrum von gekoppelten Schwingungen erzeugt, das die Auswertung sehr komplex macht. Dementsprechend ist die Reproduzierbarkeit der Messung bei Zahnriemen unbefriedigend.

Die Offenlegungsschrift DE 10 2007 019 258 A1 beschreibt ein Verfahren für den Zusammenbau einer elektrischen Hilfskraftlenkung, bei dem die Zahnriemenspannung entweder, wie bei dem oben genannten Stand der Technik, über einen Messtaster und Analyse der Eigenfrequenz der Schwingungen des Zahnriemens erfasst wird, oder über einen Messtaster eine Kraft auf das freie Trum des Riementriebs vertikal zur Riemenoberfläche ausgeübt wird. Der Messtaster ist dabei ein Dorn oder Stift, der punktuell auf den Zahnriemen gedrückt wird. Aus der Kraft oder dem Weg oder aus der Auswertung des Kraft/Weg-Diagramms wird auf die Riemenspannung geschlossen. Die Offenlegungsschrift DE 10 2008 002 304 A1 derselben Anmelderin zeigt eine entsprechende Messvorrichtung mit einem Stempel, der punktuell auf das freie Zahnriementrum wirkt. Auch hier wird die Kraft oder der Weg als Maß für die Riemenspannung ausgewertet.

Es zeigt sich in der Praxis, dass die Reproduzierbarkeit der Messergebnisse ebenfalls unbefriedigend ist. Der Messtaster in Form eines Stempels oder eines Dorns erfasst den Zahnriemen nur punktuell. Die in den Zahnriemen im Umlaufrichtung eingearbeiteten Zugstränge können aber, wie oben bereits dargestellt wurde, ungleichförmig sein, so dass die Messung davon abhängt, ob der Messtaster im Bereich eines kürzeren oder eines längeren Faserstranges in Umlaufrichtung auf den Riemen aufgebracht wird.

Im Rahmen von Versuchen zu besseren Messverfahren hat die Anmelderin Versuche mit Messtastern oder Stempeln durchgeführt, die quer zu der Laufrichtung des Riemens auf ein freies Trum des Zahnriemens gedrängt wurden, wobei der Stempel oder Messtaster so breit gestaltet wurde, das er im Wesentlichen der Breite des Zahnriemens entspricht. Dabei ergibt sich eine Anlagefläche quer zur Laufrichtung, die etwa parallel zu den einzelnen Zähnen des Zahnriemens verlief. Auch hierbei zeigt sich, dass das Verfahren selbst mit einem Messtaster, der die gesamte Zahnriemenbreite erfasst, einen Messfehler im Bereich von 30 % aufweist.

Das US-Patent US 7,210,361 B1 zeigt ein gattungsbildendes Messverfahren zur Messung der Spannung eines Zahnriemens mit einem Messelement, das eine Messgabel mit zwei in einem Abstand voneinander angeordneten Messzapfen aufweist und das mit dem Riemen in Anlage bringbar und zur mechanischen Einwirkung auf den Riemen antreibbar ist. Hier sind die beiden Messzapfen in einem Abstand auf derselben Seite des Riemens angeordnet. Ein Messtaster drückt den Zahnriemen zwischen den Messzapfen ein und die Durchbiegung wird als Maß für die Riemenspannung ausgewertet.

Es ist deshalb Aufgabe der vorliegenden Erfindung, ein Verfahren für die Messung der Riemenspannung in einem Riemengetriebe, insbesondere in einem Zahnriemengetriebe, mit höherer Messgenauigkeit und besserer Reproduzierbarkeit zu schaffen.

Diese Aufgabe wird von einem Verfahren mit den Merkmalen des Anspruchs 1 gelöst.

Weil bei einem Verfahren zur Messung einer Riemenspannung an einem flachen, an einer Innenseite wenigstens zwei um jeweilige Drehachsen drehbare Riemenräder umschlingenden Riemen in einem Riementrieb, folgende Schritte vorgesehen sind:
a) Aufsetzen eines gabelförmigen Messelements mit wenigstens zwei Messzapfen auf ein Riementrum derart, dass das Riementrum zwischen den Messzapfen angeordnet ist und die Messzapfen an gegenüberliegenden Seiten des Riemen angeordnet sind,
b) Drehen des Messelements um eine Achse, die parallel zu einer Drehachse eines der Riemenräder ausgerichtet ist, wobei das Drehen mittels eines Antriebs des Messelements erfolgt, und Aufzeichnung von Messwerten, die ein auf das Messelement einwirkendes Drehmoment und einen Drehwinkel des Messelements wiedergeben,
c) Bestimmen der Riemenspannung aus dem Messwert für das Drehmoment und/oder dem Messwert für den Drehwinkel, kann ein genauerer und besser reproduzierbarer Messwert für die Riemenspannung gewonnen werden.

Wenn weiter im Schritt b) das Drehen um einen vorgegebenen Drehwinkel erfolgt und das Drehmoment gemessen wird, das zum Erreichen des vorgegebenen Drehwinkels erforderlich ist, ist der Einfluss der Verformung des Riemens auf das Messergebnis bei jeder Messung im Wesentlichen gleich. Dies verbessert die Reproduzierbarkeit.

Wenn weiter im Schritt b) das Drehen innerhalb einer vorgegebenen Zeit erfolgt, wird auch eine zeitabhängige Dehnung des Riemens unter erhöhter Spannung während der Messung stets denselben Einfluss auf das Messergebnis haben, so dass auch dieser Faktor bei der Auswertung der Messung berücksichtigt werden kann. Vorzugsweise beträgt die vorgegebene Zeit maximal 5 Sekunden, besonders bevorzugt maximal 1 Sekunde.

Es kann weiter vorgesehen sein, dass im Schritt b) das Drehen um einen vorgegebenen Drehwinkel so erfolgt, dass der vorgegebene Drehwinkel relativ zu einem Bezugswinkel gemessen wird, welcher gegenüber dem Riementrieb oder gegenüber einem den Riementrieb umgebenden Gehäuse definiert ist.

Alternativ kann vorgesehen sein, dass im Schritt b) das Drehen bis zum Erreichen eines vorgegebenen maximalen Drehmoments erfolgt und der Drehwinkel gemessen wird, der zum Erreichen des vorgegebenen Drehmoments erforderlich ist. Dieser Drehwinkel kann als Maximalwert des Drehwinkels separat gespeichert und der Berechnung der Riemenspannung zugrunde gelegt werden.

Auf diese Weise ist sichergestellt, dass bei der Messung die Spannung der verschiedenen zu vermessenden Riemen in einer Serie stets dieselbe ist, so dass spannungsabhängige Dehnungen und Reckeffekte mit berücksichtigt werden können, was wiederum zu erhöhter Messgenauigkeit und Reproduzierbarkeit führt.

Dabei wird vorzugsweise im Schritt b) der Drehwinkel relativ zu einem Anfangsdrehwinkel gemessen, wobei der Anfangsdrehwinkel aus einem ersten Anstieg des Drehmoments während der Drehung ermittelt wird. So wird zuverlässig der Drehwinkel ab dem ersten Kontakt des Messwerkzeugs mit dem Riemen bestimmt.

Bei allen oben beschriebenen Verfahren kann es vorgesehen sein, das Drehen im Schritt b) bis zu einem vorgegebenen Drehmoment oder einem vorgegebenen Drehwinkel zunächst in einer Drehrichtung vorzunehmen, wobei erste Messwerte für Drehmoment und Drehwinkel erfasst werden, und danach das Drehen in der entgegengesetzten Drehrichtung vorzunehmen, wobei zweite Messwerte Drehmoment und Drehwinkel in dieser Drehrichtung erfasst werden.

Die beiden Sätze von Messwerten, die so gewonnen werden, erlauben eine Auswertung, die Inhomogenitäten und Asymmetrien des Riemens und der Kontaktzone, in der das Messwerkzeug an dem Riemen anliegt, zu berücksichtigen. Weiterhin ist mit Vorteil auch eine Wobbel-Funktion der Verdrehung des Messwerkzeugs zur Bestimmung eines Drehmoment-Winkel-Verlaufes denkbar und möglich.

In allen Ausführungsformen kann eine Schar von Messwertpaaren aus Drehwinkel und Drehmoment in einen Speicher eingespeichert werden. Diese Tupel können verglichen werden mit vorgegebenen Wertepaaren, so dass daraus unter Eliminierung weiterer Einflussgrößen die Genauigkeit des Messergebnisses für die Riemenspannung weiter erhöht werden kann. Es ist dabei möglich, eine mittlere Abweichung zwischen den vorgegebenen Wertepaaren und den gemessenen Wertepaaren zu bestimmen und daraus eine Aussage zu treffen, ob die Riemenspannung in einem richtigen Wertebereich liegt. Ist die Summe der Einzelabweichung aus den vorgegebenen Wertepaaren minus den gemessenen Wertepaaren größer Null und größer als ein vorgegebener, in Versuchen ermittelter Wert, muss der Riemen nachgespannt werden, da die Riemenspannung zu niedrig ist. Ist die Summe der Einzelabweichung aus den vorgegebenen Wertepaaren minus den gemessenen Wertepaaren kleiner Null und kleiner als ein zweiter vorgegebener, in Versuchen ermittelter Wert, muss die Riemenspannung verringert werden, da die Riemenspannung zu hoch ist.

Die Maße und die Formgebung der Messgabel werden zweckmäßig auf die zu vermessenden Riemen abgestimmt. So kann die Messgabel symmetrisch zu dem mittigen Schlitz sein, es kann aber auch vorgesehen sein, dass der Messzapfen der Messgabel, der an der verzahnten Innenseite des Riemens anliegt, quer zu der Drehachse eine Breite aufweist, die bei der Messung wenigstens drei Zahnköpfe der Riemenverzahnung überdeckt und/oder berührt. Der die Außenseite des Riemens berührende Messzapfen kann schmaler, beispielsweise auch rund ausgebildet sein. Das Verhältnis B/H aus der Breite des innen liegenden Messzapfens und der Höhe des Schlitzes zwischen den Messzapfen, in den der Riemen eingeführt wird, liegt vorzugsweise zwischen B/H=1,5 und B/H=3.

Nachfolgend werden Ausführungsbeispiele der vorliegenden Erfindung anhand der Zeichnung beschrieben. Es zeigen:
- Figur 1:: Ein an sich bekanntes elektromechanisches Lenkgetriebe in einer Seitenansicht;
- Figur 2:: Das Lenkgetriebe aus Figur 1 in einer Draufsicht;
- Figur 3:: Den Zahnriementrieb des Lenkgetriebes aus Figur 1 in einer isolierten perspektivischen Darstellung mit einer beabstandeten Messgabel;
- Figur 4:: Das Riemengetriebe aus Figur 3 mit aufgesetzter Messgabel;
- Figur 5:: Das Riemengetriebe des Lenkgetriebes aus Figur 1 in einem Querschnitt entlang der Linie A-A in einer ersten Spannposition;
- Figur 6:: Das Getriebe aus Figur 5 in einer zweiten Spannposition mit höherer Riemenspannung;
- Figur 7:: Eine perspektivische Darstellung mit einer Messgabel, die auf einen Zahnriemen aufgesetzt und gespannt ist;
- Figur 8:: Die Messgabel aus Figur 7 in einer Stirnansicht;
- Figur 9:: Die Messgabel aus Figur 8 in einer anderen Stellung; sowie
- Figur 10:: Eine andere Ausführungsform einer Messgabel mit zylindrischen Messzapfen;
- Figur 11:: Gerät zur Bestimmung der Riemenspannung; sowie
- Figur 12:: Darstellung von Wertepaaren aus Drehwinkel und gemessenem Drehmoment.

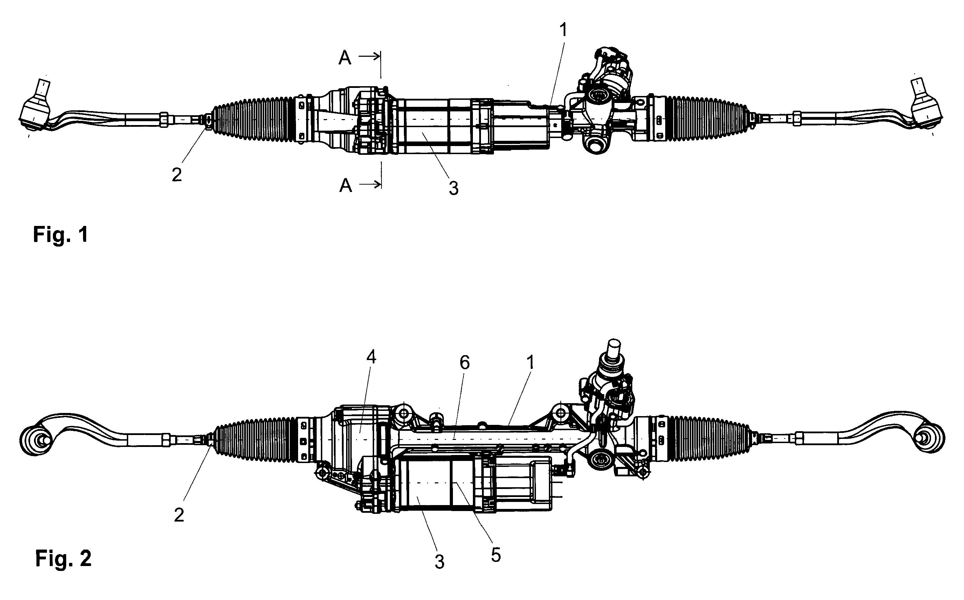

Die Figur 1 zeigt eine an sich bekannte mechanische Servolenkung für ein Kraftfahrzeug mit einem Lenkungsgehäuse 1, in dem eine Zahnstange 2 längs verschieblich gelagert ist. Zur Servounterstützung der Lenkbewegung ist ein elektrischer Servomotor 3 vorgesehen, der über ein Riemengetriebe und einen Kugelumlauf auf die Zahnstange 2 wirkt.

Die Figur 2 zeigt das Lenkgetriebe aus Figur 1 in einer um 90 Grad um die Längsachse der Zahnstange 2 gedrehten Darstellung. Das Lenkungsgehäuse 1 weist einen hier erkennbaren Gehäuseabschnitt 4 auf, in dem der Kugelumlauf für den Antrieb der Zahnstange 2 angeordnet ist. Es ist erkennbar, dass eine Drehachse 5 des Servomotors 3 parallel zu einer Längsachse 6 der Zahnstange 2 ausgerichtet ist, wobei die Längsachse 6 die Verschieberichtung der Zahnstange im Betrieb darstellt.

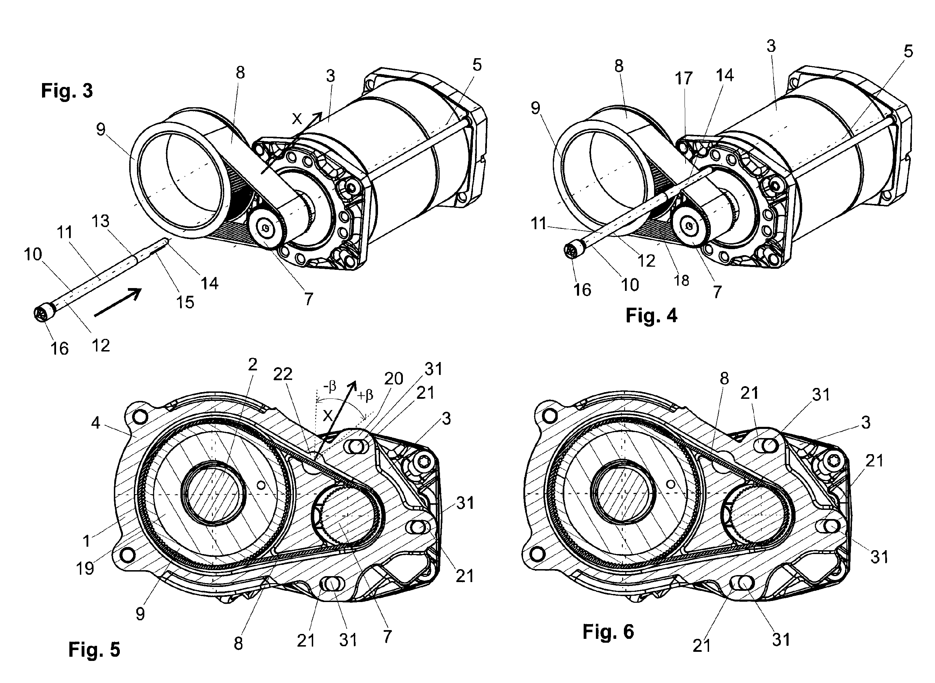

Die Figur 3 zeigt perspektivisch den Servomotor 3 mit seiner Drehachse 5 aus den Figuren 1 und 2. Der Servomotor 3 verfügt an seiner Abtriebsseite über ein Ritzel 7, das mit einem Zahnriemen 8 in Eingriff steht. Der Zahnriemen 8 treibt eine Riemenscheibe 9 an, die mit dem nicht dargestellten Kugelumlauf in Eingriff steht. Die Riemenscheibe 9 umgibt den Kugelumlauf und die Zahnstange 2 in eingebautem Zustand gemäß Figur 2.

In einem Abstand von dem Zahnriemen 8 ist eine Messgabel 10 dargestellt, die auf den Zahnriemen 8 aufsetzbar ist. Die Messgabel 10 weist eine Symmetrieachse 11 auf, die zugleich auch im Betrieb die Drehachse der Messgabel 10 darstellt. Weiter weist die Messgabel 10 einen Schaft 12 auf, der langgestreckt zylindrisch ausgebildet ist. An einem ersten freien Ende 13 des Schaftes 12 sind zwei sich gegenüber liegende Zapfen 14 und 15 ausgebildet, die an dem Schaft 12 einstückig angeformt sind, die sich parallel zu der Drehachse 11 erstrecken und voneinander beabstandet sind. An dem Ende, das den Messzapfen 14 gegenüber liegt, trägt die Messgabel 10 einen Anschluss 16 für einen Antrieb. Der Anschluss 16 ist hier als Innenvierkant ausgebildet.

Die Figur 4 zeigt die Anordnung aus Figur 3. Gleiche Bauelemente tragen gleiche Bezugsziffern.

In der Figur 4 ist dargestellt, wie die Messgabel 10 auf den Zahnriemen aufgesetzt ist. Der Zahnriemen 8 wird dabei zwischen die Messzapfen 14 und 15 eingeführt, so dass in der Figur 4 nur der Messzapfen 14 sichtbar ist, der an der Außenseite des Zahnriemens an einem Riementrum 17 anliegt, das frei zwischen dem Ritzel 7 und der Riemenscheibe 9 verläuft. Dem Riementrum 17 gegenüber liegt ein zweites Riementrum 18. Die Messzapfen 14 und 15 erstrecken sich mit ihren Längsachsen parallel zu der Oberfläche des Zahnriemens 8, der im Wesentlichen flach ausgebildet ist. Die Längsachse der Zapfen und die Längsachse 11 der Messgabel 10 verlaufen dabei parallel zu der Oberfläche des Riementrums 17 und senkrecht zu der Laufrichtung des Zahnriemens 8 im Betrieb.

Bei den in Figur 4 gezeigten Ausführungsbeispiel ist die Länge der Messzapfen 14 und 15 so gewählt, dass sie den Zahnriemen 8 in seiner gesamten Breite überdecken und noch etwa 10% über die Breite des Zahnriemens hinausstehen. Es kann eine Überdeckung von nur 70% der Riemenbreite in vielen Fällen für eine erforderliche Messgenauigkeit ausreichend sein. Eine vollständige Überdeckung der Breite des Zahnriemens durch die Messzapfen 14, 15 der Messgabel 10 ist jedoch zu bevorzugen. Dabei ist wegen der Vereinfachung der Handhabung sogar noch zu bevorzugen, dass die Messzapfen etwa 10% über die Riemenbreite hinausstehen.

Die Figur 5 zeigt einen Querschnitt entlang der Linie A-A aus Figur 1. Gleiche Bauelemente tragen gleiche Bezugsziffern. In diesem Querschnitt ist die Zahnstange 2 mit einem Kugelumlauf 19 dargestellt, wobei der Kugelumlauf 19 unmittelbar mit der umgebenden Riemenscheibe 9 antriebsmäßig verbunden ist. Der Kugelumlauf 19 wirkt auf einen Gewindespindelabschnitt der Zahnstange 2 als Spindeltrieb zur Wandlung der Drehbewegung, die durch den Servomotor 3 über den Riementrieb erzeugt wird, in eine Längsbewegung in Richtung der Längsachse 6 der Zahnstange 2, wie sie zu Lenkbewegungen in Kraftfahrzeugen erforderlich ist.

Das Getriebegehäuse 4 weist einen Flansch 20 auf, in dem der Servomotor 3 mit Befestigungsschrauben 31 über Langlöcher 21 zur Spannung des Zahnriemens 8 verschieblich befestigbar ist. Durch Verschieben des Elektromotors in den Langlöchern 21 wird der Abstand der Drehachse 5 des Elektromotors von der Zahnstange 2 in an sich bekannter Weise variiert. Das Getriebegehäuse 4 weist eine parallel zu der Drehachse 5 des Elektromotors 1 verlaufende Bohrung 22 auf, in die die Messgabel 10 so einsetzbar ist, dass der Messzapfen 14 an der äußeren Oberfläche des Zahnriemens 8 positioniert wird, während der andere Messzapfen 15 an der inneren, verzahnten Oberfläche des Zahnriemens 8 positioniert wird. Entsprechend ist der Freiraum zwischen den Zapfen oder auch Stiften der Messgabel senkrecht zur Flächennormalen X der äußeren Riemenoberfläche ausgerichtet. Die Messgabel 10 ist in der Bohrung 22 um einen Winkel +/-β drehbar.

Die Figur 6 zeigt einen Querschnitt entsprechend Figur 5, wobei der Elektromotor 3 mit seinen Befestigungsschrauben 31 in den Langlöchern 21 in eine zahnstangenferne Position verlagert ist. In dieser Position ist die Spannung des Zahnriemens 8 maximal. Die Position des Elektromotors 3 wird in den Langlöchern mittels den Befestigungsschrauben 31 fixiert.

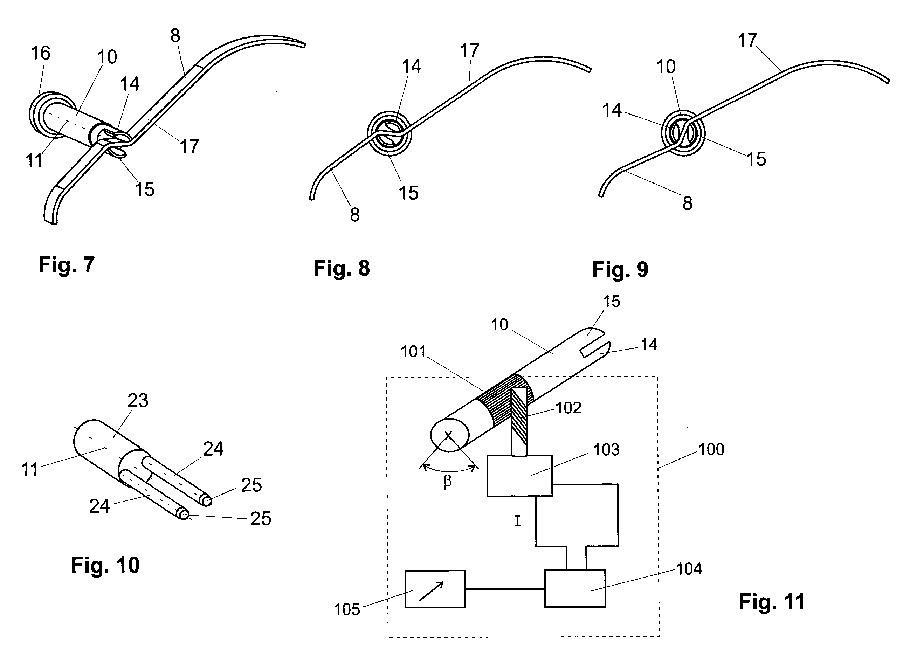

Die Figur 7 zeigt in einer perspektivischen Prinzipdarstellung die Messgabel 10 mit den Messzapfen 14 und 15 sowie mit dem Zahnriemen 8, der zwischen den Messzapfen 14 und 15 verläuft, wie dies bereits zu Figur 4 beschrieben ist. Die Messgabel 10 ist um ihre Drehachse 11 gedreht, so dass der Messzapfen 14 mit einer in Drehrichtung voreilenden Seite auf die äußere Oberfläche des Zahnriemens 8 drückt, während der Messzapfen 15 mit einer voreilenden Seite gegen die im Betrieb innen liegende, verzahnte Oberfläche des Zahnriemens 8 drängt. Der Zahnriemen 8 wird dadurch an der mit der Messgabel 10 beaufschlagten Stelle S-förmig verformt.

Durch einen an dem Anschluss 16, der in der Figur 7 nicht sichtbar ist, angreifenden Antrieb mit einem Drehwinkelsensor und einem Drehmomentsensor kann eine Funktion des Drehmoments in Abhängigkeit von dem Drehwinkel aufgenommen werden. Diese Funktion ist kennzeichnend für die Riemenspannung des Zahnriemens 8. Die Messgabel 10 erlaubt aufgrund ihrer Ausgestaltung mit stirnseitigen Messzapfen 14 und 15 sowie aufgrund ihrer Drehbarkeit um die Drehachse 11 eine solche Messung, deren Präzision besonders hoch ist und die insbesondere auch Messwerte liefert, die eine erweiterte Auswertung der Messung erlauben, da beispielsweise die Biegesteifigkeit des Zahnriemens gemessen und berücksichtigt werden kann.

Die Figur 8 zeigt die Anordnung aus Figur 7 in einer Stirnansicht in Richtung der Drehachse 11.

Die Figur 9 zeigt die Messgabel 10 mit den Messzapfen 14 und 15 im Eingriff mit dem Zahnriemen 8, wobei die Messgabel 10 um ihre Drehachse entgegengesetzt zu der Darstellung gemäß Figur 7 und Figur 8 verdreht ist. Diese Darstellung zeigt, dass die Messgabel 10 zur Messung der Riemenspannung in zwei Richtungen verdreht werden kann, nämlich einmal in der Darstellung aus Figur 8 im Uhrzeigersinn und in der Darstellung gemäß Figur 9 gegen den Uhrzeigersinn. Beide Drehbewegungen können für sich zur Messung der Riemenspannung eingesetzt werden. Ein besonders genaues Ergebnis ergibt sich, wenn für eine Messung der Riemenspannung des Zahnriemens 8 beide Drehbewegungen durchgeführt, separat erfasst und dann gemeinsam ausgewertet werden. Dadurch kann beispielsweise eine Asymmetrie des Riementriebs berücksichtigt und das Messergebnis entsprechend korrigiert werden. Es ist dabei auch denkbar und möglich, diese Drehung mit vorgegebener Frequenz abwechselnd in beide Drehrichtungen mehrfach auszuführen (=Wobbelfunktion) und die Auswertung über mehrere Zyklen hinweg durchzuführen.

Die Messgabel 10 ist im Bereich der Messzapfen 14 und 15 so ausgebildet, dass die äußere Oberfläche der Messzapfen 14 und 15, die nicht in Kontakt mit dem Zahnriemen 8 kommt, Teil eines zylindrischen Mantels ist, so dass die äußeren Oberflächen der Messzapfen 14 und 15 nicht über die äußere Umfangsfläche des Schaftes 12 in Radialrichtung nach außen hervorstehen. Der Zwischenraum, der zwischen den Messzapfen 14 und 15 zur Aufnahme des Zahnriemens 8 gebildet ist, ist als Schlitz in das Material der Messgabel 10 eingearbeitet. Die Formgebung der inneren Oberflächen der Messzapfen 14 und 15 ist abgerundet, damit keine scharfkantigen Bereiche mit dem Zahnriemen 8 in Kontakt kommen. Die innere Oberfläche kann beispielsweise teilelliptisch, teilkreisförmig oder auch flach mit abgerundeten Übergangsbereichen sein. Der Querschnitt der Messzapfen 14 und 15 ist im Wesentlichen gleich, wie dies in Figur 8 und Figur 9 ersichtlich ist. Der Querschnitt der Messzapfen 14 und 15 ist auch in Richtung der Drehachse 11 in dem Bereich, in dem die Messgabel 10 im Betrieb an dem Zahnriemen 8 anliegt, konstant.

Figur 10 zeigt schließlich eine Messgabel 23, die als Messzapfen zwei zylindrische Stifte 24 aufweist. Die Stifte 24 sind an ihren freien Enden 25 abgerundet. Diese Messgabel 23 kann ebenso wie die Messgabel 10 in der beschriebenen Weise auf den Zahnriemen 8 aufgesetzt werden und durch Verdrehung um die Drehachse 11 dann die Funktion Drehwinkel/Drehmoment aufgezeichnet werden. Es ist dabei auch denkbar und möglich, diese Drehung mit vorgegebener Frequenz abwechselnd in beide Drehrichtungen mehrfach auszuführen (=Wobbelfunktion) und die Auswertung über mehrere Zyklen hinweg durchzuführen.

Das erfindungsgemäße Verfahren zur Messung der Riemenspannung wird nun wie folgt ausgeführt:

Die Riemenspannung des flachen Zahnriemens 8 aus den Figuren 3 und 4 soll bestimmt werden, beispielsweise im Rahmen einer Endkontrolle eines Lenkgetriebes nach den Figuren 1 und 2 bei der Fertigung oder bei Montage des Lenksystems oder im Rahmen einer Verschleißkontrolle. Dazu wird als Messwerkzeug die Messgabel 10 so auf den Zahnriemen 8 im Bereich des Riementrums 17 aufgesetzt, dass der Zahnriemen 8 zwischen den Messzapfen 14 und 15 liegt. Die durch die Drehachse 11 des Messwerkzeugs definierte Gerade durchsetzt dabei den Zahnriemen 8 quer zu seiner Laufrichtung und parallel zu der Flachseite. Die Messgabel 10 ist an ihrem Anschluss 16 mit einem Aktuator verbunden, der zum einen einen Antrieb zur Drehung der Messgabel 10 um die Achse 11 aufweist und in der zum anderen Sensoren aufweist, die bei der Drehung den Drehwinkel und das Drehmoment messen und aufzeichnen können. Das Drehmoment und/oder der Drehwinkel werden auch zur Steuerung des Aktuators während der Messung verwendet.

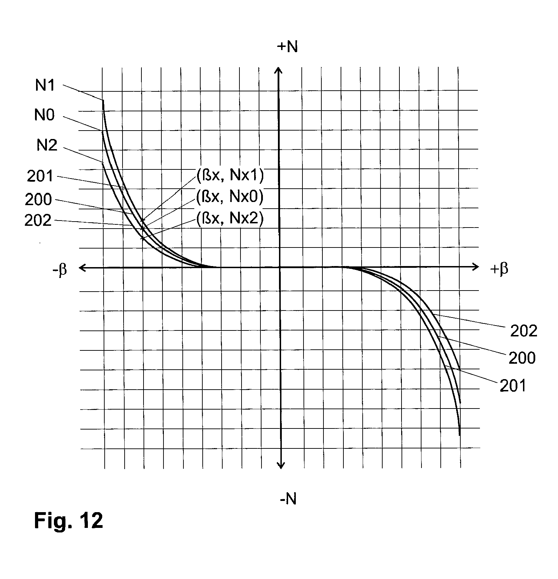

In einer ersten Alternative wird die Messgabel durch den Aktuator um die Drehachse 11 um einen vorgegebenen Drehwinkel verdreht, beispielsweise um 45 Grad, und es wird das Drehmoment aufgezeichnet, das für die Erreichung dieses vorgegebenen Drehwinkels erforderlich ist. Der vorgegebene Drehwinkel kann dabei in einfacher Weise durch einen festen Anschlag auf der Seite des Antriebs des Messzapfens bestimmt werden. Vorzugsweise wird die Messvorrichtung so eingerichtet, dass das Drehmoment, welches der Aktuator über den Anschluss 16 auf die Messgabel 10 ausübt, kontinuierlich gemessen und aufgezeichnet wird, so dass ein Datensatz mit mehreren Messpunkten erhalten wird, die die Abhängigkeit des Drehwinkels von dem Drehmoment oder umgekehrt wiedergeben. Dies ist in Fig. 12 veranschaulicht. Hier sind für drei verschiedene Riemenspannungen die Drehmomente +/-N, die an der Messgabel 10 wirken, als Funktion über dem Drehwinkel +/-ß, mit dem die Messgabel gegenüber der Flächennormalen X der äußeren Riemenoberfläche verdreht ist, dargestellt. Die Kurven werden durch eine Anzahl von Wertepaaren (ßx, Nx0) für die Sollkurve und (ßx, Nx1) für einer überhöhte Riemenspannung und (ßx, Nx2) für eine zu kleine Riemenspannung gebildet. Dabei ist als Riemenoberfläche eine ebene Fläche zu verstehen, die der gemittelten Fläche über die Unebenheiten der Riemenoberfläche gebildet ist und sich in der Ausrichtung erstreckt, wie sie sich aus der Konstruktion ergibt und allfällige Durchbiegungen unberücksichtigt lässt. In den Figuren 3 und 5 ist die Flächennormale X veranschaulicht.

Das oben genannte Drehmoment N entsteht dadurch, dass die Messzapfen 14 und 15 von zwei verschiedenen Seiten her in entgegengesetzter Richtung auf den Zahnriemen 8 einwirken und den Zahnriemen dabei wie in Figuren 7 bis 9 dargestellt verformen. Der Zahnriemen 8 setzt der Drehung der Messgabel 10 einen Widerstand entgegen, von der Spannung des Zahnriemens 8 abhängig ist. Aus den Messwerten für Drehwinkel ß und Drehmoment N lässt sich deshalb die Riemenspannung mit hoher Genauigkeit ermitteln. Dafür kann eine zuvor empirisch ermittelte Tabelle oder eine ebenfalls empirisch ermittelte Funktion benutzt werden, die zu jedem Wertepaar (Drehmoment/Drehwinkel) die entsprechende Riemenspannung ausgibt.

Durch das Verdrehen der Messgabel 10 erhöht sich der Absolutwert der Riemenspannung aufgrund der Verformung des Riemens während der Messung. Zahnriemen haben die Eigenschaft, dass durch Dehnung die Riemenspannung anfangs abfällt und sich einem konstantem Wert annähert. Um die Beeinflussung des Zahnriemens 8 durch die Belastung während der Messung zu minimieren, wird die Verdrehung der Messgabel 10 in den vorgegebenen Drehwinkel nur für eine beschränkte Zeit vorgenommen, die vorzugsweise möglichst kurz sein soll. So ist in einer bevorzugten Ausführungsform vorgesehen, den maximalen Drehwinkel während der Messung für maximal 1 Sekunde aufrecht zu erhalten. Auch während dieser Haltezeit kann das Drehmoment am Anschluss 16 weiter aufgezeichnet werden, so dass auch der Abfall des Drehmoments aufgrund der erhöhten Spannung während der Messung gemessen werden kann. Dieser Abfall des Drehmoments kann als Information über die Eigenschaften des jeweiligen einzelnen Zahnriemens 8 zusätzlich erfasst und ausgewertet werden.

In der Fig. 12 veranschaulicht die erste Kurve 200 im Beispiel eine gewünschte Riemenspannung, während die zweite Kurve 201 einen Verlauf für eine zu große Riemenspannung und die dritte Kurve 202 einen Verlauf für eine zu niedrige Riemenspannung veranschaulicht. Es ist jetzt möglich, entweder einfach den Wert des Drehmomentes N beim Verdrehungswinkel ß, bei dem Maximalwert von ß, mit dem Sollwert N0 zu vergleichen oder die Summe aller bei den verschiedenen Winkelwerten ßx aufgezeichneten Dremoment-Werte Nx1 einer Messkurve mit der Summe der Drehmomentwerte Nx0 zu den aufgezeichneten Winkelwerten ßx zu vergleichen.

Eine alternative Ausführungsform sieht vor, dass nach dem Aufsetzen der Messgabel 10 auf den Zahnriemen 8 der Aktuator über den Anschluss 16 die Messgabel 10 um ihre Drehachse 11 verdreht, bis ein vorgegebenes Drehmoment erreicht wird. Hier kann dann der Drehwinkel gemessen werden, der zur Erreichung des vorgegebenen Drehmoments erforderlich ist. Aus dem Drehwinkel und dem Drehmoment kann dann die Riemenspannung ermittelt werden. Wieder kann auch über die gesamte Drehung der Messgabel 10 ein Datensatz gewonnen werden, der zu jedem Drehwinkel einen Drehmomentwert enthält. Die dadurch aufgenommene Funktion wird zur Bestimmung der Riemenspannung herangezogen. Ein Vorteil dieses Verfahrens besteht darin, dass die Zugbelastung durch die zusätzlich aufgebrachte Riemenspannung während der Messung bei jeder Messung etwa gleich ist. Die erste Alternative, die oben beschrieben wurde, hat den Vorteil, dass die Verformung des Riemens durch den konstant gehaltenen Drehwinkel bei jeder Messung dieselbe ist.

In einer vereinfachten Ausführungsform kann die Messung des Verdrehwinkels dadurch erfolgen, dass die Messgabel 10 an einen Winkelanschlag fährt, der einen vorgegebenen Drehwinkel repräsentiert. Bei einer solchen Vorrichtung, die in der Zeichnung nicht dargestellt ist, dreht der Aktuator die Messgabel 10 bis zum Erreichen des Winkelanschlages, womit der Momentanwert des Drehwinkels bereits ohne weitere Messung definiert ist. Es kann dann bis zu diesem Drehwinkel der aufgewendete Drehmomentwert bestimmt werden. Somit liegt ein Messwert vor, der zur Berechnung der Riemenspannung in manchen Fällen ausreichend sein kann.

Für eine noch höhere Genauigkeit kann vorgesehen sein, die Messung der Riemenspannung in beiden möglichen Drehrichtungen der Messgabel 10 vorzunehmen, so dass zwei unabhängige Messungen vorliegen, deren Messergebnisse miteinander verglichen werden können, oder dass die beiden gewonnenen Datensätze gemeinsam zur Ermittlung der Riemenspannung ausgewertet werden.

Eine weitere Möglichkeit, präzise Messdaten zu gewinnen, besteht in der Durchführung eine Wobbelverfahrens, bei dem das Drehmoment und der Drehwinkel an der Messgabel mit einer Frequenz von beispielsweise 1 Hz bis 10 Hz variiert wird.

Falls die jeweils gemessene Kurve des Drehmomentenverlaufes Nx über dem Drehwinkel ßx beim Hin- und Herdrehen der Messgabel eine Hysterese bilden, kann jeweils der Mittelwert Nx1, Nx2, Nx0 aus den beiden Messwerten für die beiden Drehrichtungen oder die mehreren Wobbeldurchläufe bestimmt werden und für die Auswerteoperation verwendet werden.

Im Falle eines Riementriebes, wie er in den Figuren 3 bis 6 dargestellt ist, wird die Riemenspannung auch durch eine mögliche Exzentrität des Ritzels 7 oder des Riemenrades 9 beeinflusst. Es kann deshalb auch vorgesehen sein, mehrere Messungen zur Ermittlung einer mittleren Riemenspannung vorzunehmen, wobei zwischen den einzelnen Messungen das Ritzel 7 und damit auch das Riemenrad 9 bewegt wird. Die Messung wird dann in verschiedenen Stellungen des Riementriebes durchgeführt, wodurch Exzentritäten des Riementriebes berücksichtigt und falls erforderlich, auch gemessen und separat ausgewertet werden können, etwa zur Qualitätskontrolle.

Fig. 11 veranschaulicht eine Messeinheit, die auch als transportables Gerät 100 ausgebildet sein kann. Die Messgabel 10 mit den Messzapfen 14, 15 wird über eine Verzahnung 101 durch einen Antriebszapfen 102 in Drehung versetzt. Der Antriebszapfen 102 wird durch einen Elektromotor 103 angetrieben. Eine Steuerung 104 treibt den Elektromotor an, misst dabei den Verdrehungswinkel ß und den Treiberstrom I als Referenz für das Drehmoment mit der die Messgabel 10 gegenüber dem Zahnriemen 17 verdreht wird. Die Steuerung 104 berechnet daraus die Zahnriemenspannung oder eine Größe, die dafür repräsentativ ist. In der Anzeige 105 wird Wert der Zahnriemenspannung oder der dafür repräsentative Wert ausgegeben. Diese Messeinheit kann direkt in der Anordnung, wie sie in Fig. 4 veranschaulicht ist, eingesetzt werden.

Alternativ ist es denkbar und möglich, mit einem Drehmomentenschlüssel direkt am Anschluss 16 anzusetzen, den Drehmomentenschlüssel um einen vordefinierten Winkel, von beispielsweise 30° oder 40° oder 90°, zu verdrehen und das Drehmoment als Maßstab für die Riemenspannung zu verwenden. Dabei kann in einer Tabelle für den jeweiligen Anwendungsfall eine Zuordnung zwischen Riemenspannung und Drehmoment, bei vorgegebenem Verdrehungswinkel, abgelegt sein. Liegt dieses Drehmoment unter einem vorgegebenen Grenzwert, ist dies ein Anzeichen für einen erforderlichen Riemenaustausch.

### Bezugsziffernliste

- 1: Lenkungsgehäuse
- 2: Zahnstange
- 3: Servomotor
- 4: Gehäuseabschnitt
- 5: Drehachse
- 6: Längsachse
- 7: Ritzel
- 8: Zahnriemen
- 9: Riemenscheibe
- 10: Messgabel
- 11: Symmetrieachse
- 12: Schaft
- 13: freies Ende
- 14: Zapfen
- 15: Zapfen
- 16: Anschluss
- 17: Riementrum
- 18: Riementrum
- 19: Kugelumlauf
- 20: Flansch
- 21: Langlöcher
- 22: Bohrung
- 23: Messgabel
- 24: Stifte
- 25: freie Enden
- 31: Befestigungsschrauben
- 100: Gerät
- 101: Verzahnung
- 102: Antriebszapfen
- 103: Motor
- 104: Steuerung
- 105: Anzeige
- 200: erste Kurve
- 201: zweite Kurve
- 202: dritte Kurve
- ß, ßx: Verdrehwinkel
- N, Nx: Drehmoment
- X: Flächennormale

## Patentansprüche

1. Verfahren zur Messung einer Riemenspannung an einem flachen, an einer Innenseite wenigstens zwei um jeweilige Drehachsen drehbare Riemenräder (7, 9) umschlingenden Riemen in einem Riementrieb, **gekennzeichnet durch** folgende Schritte:
a) Aufsetzen eines gabelförmigen Messelements (10,23) auf ein Riementrum (17, 18) derart, dass das Riementrum (17, 18) zwischen zwei Messzapfen (14, 15, 24) des gabelförmigen Messelements (10, 23) angeordnet ist und die Messzapfen (14,15,24) an gegenüberliegenden Seiten des Riementrums (17,18) angeordnet sind,
b) Drehen des Messelements (10, 23) um eine Achse, die parallel zu einer Drehachse eines Riemenrades (7, 9) ausgerichtet ist, wobei das Drehen mittels eines Antriebs des Messelements (10, 23) erfolgt, und Aufzeichnung von Messwerten, die ein auf das Messelement (10, 23) einwirkendes Drehmoment und einen Drehwinkel des Messelements wiedergeben,
c) Bestimmen der Riemenspannung aus dem Messwert für das Drehmoment und/oder dem Messwert für den Drehwinkel.

2. Verfahren nach Anspruch 1, **dadurch gekennzeichnet, dass** im Schritt b) das Drehen um einen vorgegebenen Drehwinkel erfolgt und dass das Drehmoment gemessen wird, das zum Erreichen des vorgegebenen Drehwinkels erforderlich ist.

3. Verfahren nach einem der vorhergehenden Ansprüche, **dadurch gekennzeichnet, dass** im Schritt b) das Drehen innerhalb einer vorgegebenen Zeit erfolgt.

4. Verfahren nach einem der vorhergehenden Ansprüche, **dadurch gekennzeichnet, dass** die vorgegebene Zeit maximal 5 s beträgt.

5. Verfahren nach einem der vorhergehenden Ansprüche, **dadurch gekennzeichnet, dass** die vorgegebene Zeit maximal 1 s beträgt.

6. Verfahren nach einem der vorhergehenden Ansprüche, **dadurch gekennzeichnet, dass** im Schritt b) der vorgegebene Drehwinkel relativ zu einem Bezugswinkel erfolgt, der gegenüber dem Riementrieb oder einem den Riementrieb umgebenden Gehäuse definiert ist.

7. Verfahren nach Anspruch 1, **dadurch gekennzeichnet, dass** im Schritt b) das Drehen bis zum Erreichen eines vorgegebenen maximalen Drehmoments erfolgt und dass der Drehwinkel gemessen wird, der zum Erreichen des vorgegebenen Drehmoments erforderlich ist.

8. Verfahren nach Anspruch 7, **dadurch gekennzeichnet, dass** im Schritt b) der Drehwinkel relativ zu einem Anfangsdrehwinkel gemessen wird, welcher aus einem ersten Anstieg des Drehmoments während der Drehung ermittelt wird.

9. Verfahren nach einem der vorhergehenden Ansprüche, **dadurch gekennzeichnet, dass** das Drehen im Schritt b) bis zu einem vorgegebenen Drehmoment oder einem vorgegebenen Drehwinkel zunächst in einer Drehrichtung erfolgt, wobei erste Messwerte für Drehmoment und Drehwinkel erfasst werden, und danach das Drehen in der entgegengesetzten Drehrichtung erfolgt, wobei zweite Messwerte Drehmoment und Drehwinkel in dieser Drehrichtung erfasst werden.

10. Verfahren nach Anspruch 9, **dadurch gekennzeichnet, dass** zur Berechnung der Riemenspannung die ersten und die zweiten Messwerte ausgewertet werden.

## Claims

1. Method for measuring a belt tension on a flat belt in a belt drive, which belt wraps around at least two belt pulleys (7, 9), which can rotate about respective rotation axes, on an inner side, **characterized by** the following steps:
a) mounting a fork-like measuring element (10, 23) on a belt strand (17, 18) in such a way that the belt strand (17, 18) is arranged between two measuring pins (14, 15, 24) of the fork-like measuring element (10, 23), and the measuring pins (14, 15, 24) are arranged on opposite sides of the belt strand (17, 18),
b) rotating the measuring element (10, 23) about an axis which is oriented parallel to a rotation axis of a belt pulley (7, 9), wherein the rotation is performed by means of a drive of the measuring element (10, 23), and recording measurement values which represent a torque which acts on the measuring element (10, 23) and a rotation angle of the measuring element,
c) determining the belt tension from the measurement value for the torque and/or the measurement value for the rotation angle.

2. Method according to Claim 1, **characterized in that**, in step b), the rotation is performed through a prespecified rotation angle, and **in that** the torque which is required to reach the prespecified rotation angle is measured.

3. Method according to either of the preceding claims, **characterized in that**, in step b), the rotation is performed within a prespecified time.

4. Method according to one of the preceding claims, **characterized in that** the prespecified time is 5 s at most.

5. Method according to one of the preceding claims, **characterized in that** the prespecified time is 1 s at most.

6. Method according to one of the preceding claims, **characterized in that**, in step b), the prespecified rotation angle is performed relative to a reference angle which is defined with respect to the belt drive or a housing which surrounds the belt drive.

7. Method according to Claim 1, **characterized in that**, in step b), the rotation is performed until a prespecified maximum torque is reached, and **in that** the rotation angle which is required to reach the prespecified torque is measured.

8. Method according to Claim 7, **characterized in that**, in step b), the rotation angle is measured relative to a starting rotation angle which is ascertained from a first increase in the torque during the rotation.

9. Method according to one of the preceding claims, **characterized in that** the rotation in step b) up to a prespecified torque or a prespecified rotation angle is initially performed in one rotation direction, wherein first measurement values for torque and rotation angle are detected, and then the rotation is performed in the opposite rotation direction, wherein second measurement values for torque and rotation angle in this rotation direction are detected.

10. Method according to Claim 9, **characterized in that** the first and the second measurement values are evaluated in order to calculate the belt tension.

## Revendications

1. Procédé de mesure d'une tension de courroie sur une courroie plane passant sur une face interne d'au moins deux poulies de courroie (7, 9) rotatives autour d'axes de rotation respectifs dans un entraînement à courroie, **caractérisé par** les étapes consistant à :
a) mettre en place un élément de mesure fourchu (10, 23) sur un brin de courroie (17, 18) de manière à ce que le brin de courroie (17, 18) soit disposée entre deux tenons de mesure (14, 15, 24) de l'élément de mesure fourchu (10, 23) et que les tenons de mesure (14, 15, 24) soient disposés sur des faces opposées du brin de courroie (17, 18),
b) mettre en rotation l'élément de mesure (10, 23) autour d' un axe qui est orienté parallèlement à un axe de rotation d'une poulie de courroie (7, 9), dans lequel la rotation est effectuée au moyen d'un dispositif d'entraînement de l'élément de mesure (10, 23), et enregistrer des valeurs de mesure qui représentent un couple de rotation appliqué à l'élément de mesure (10, 23) et un angle de rotation de l'élément de mesure,
c) déterminer la tension de la courroie à partir de la valeur de mesure du couple de rotation et/ou de la valeur de mesure de l'angle de rotation.

2. Procédé selon la revendication 1, **caractérisé en ce que**, lors de l'étape b), la mise en rotation est effectuée sur un angle de rotation prédéterminé et **en ce que** le couple de rotation qui est nécessaire pour atteindre l'angle de rotation prédéterminé est mesuré.

3. Procédé selon l'une quelconque des revendications précédentes, **caractérisé en ce que**, lors de l'étape b), la mise en rotation est effectuée au cours d'un intervalle de temps prédéterminé.

4. Procédé selon l'une quelconque des revendications précédentes, **caractérisé en ce que** l'intervalle de temps prédéterminé est au maximum de 5 s.

5. Procédé selon l'une quelconque des revendications précédentes, **caractérisé en ce que** l'intervalle de temps prédéterminé est au maximum de 1 s.

6. Procédé selon l'une quelconque des revendications précédentes, **caractérisé en ce que**, lors de l'étape b), l'angle de rotation prédéterminé s'effectue par rapport à un angle de référence qui est défini en référence à l'entraînement à courroie ou à un boîtier enveloppant l'entraînement à courroie.

7. Procédé selon la revendication 1, **caractérisé en ce que**, lors de l'étape b), la rotation est effectuée jusqu'à ce qu'un couple de rotation maximum prédéterminé soit atteint et **en ce que** l'angle de rotation qui est nécessaire pour atteindre le couple de rotation prédéterminé est mesuré.

8. Procédé selon la revendication 7, **caractérisé en ce que**, lors de l'étape b), l'angle de rotation est mesuré par rapport à un angle de départ qui est déterminé pendant la rotation à partir d'une première augmentation du couple de rotation.

9. Procédé selon l'une quelconque des revendications précédentes, **caractérisé en ce que** la mise en rotation, lors de l'étape b), est tout d'abord effectuée dans une sens de rotation jusqu'à un couple de rotation prédéterminé ou jusqu'à un angle de rotation prédéterminé, dans lequel les premières valeurs de mesure du couple de rotation et de l'angle de rotation sont acquises, puis **en ce que** la mise en rotation s'effectue dans le sens de rotation opposé, dans lequel des deuxièmes valeurs de mesure du couple de rotation et de l'angle de rotation sont acquises dans ledit sens de rotation.

10. Procédé selon la revendication 9, **caractérisé en ce que**, pour calculer la tension de la courroie, les premières et les deuxièmes valeurs de mesure sont exploitées.
